# EUROPÄISCHE PATENTANMELDUNG

(11) **EP 3 103 692 A1**
(43) Veröffentlichungstag der Anmeldung: **14.12.2016**
(21) Anmeldenummer: 16172942.1
(22) Anmeldetag: 03.06.2016
(51) Int. Cl.: B60W 10/06, B60W 10/08, B60W 10/184, B60W 30/02, B60W 40/114, B60W 50/00

(54) **VERFAHREN UND VORRICHTUNG ZUR REDUZIERUNG EINER SCHLINGERBEWEGUNG EINES ZWEIRADS**

(30) Priorität: 12.06.2015 DE 102015210758
(71) Anmelder: ROBERT BOSCH GMBH, 70442 Stuttgart (DE)
(72) Erfinder: Dasbach, Gregor, 72074 Tuebingen (DE)

(57) **Zusammenfassung**

Mit der vorliegenden Erfindung wird ein Verfahren zur Reduzierung eines Lenkerflattern bzw. einer Schlingerbewegung eines Zweirads, eine Steuereinheit (100), die ein derartiges Verfahren durchführt sowie ein damit ausgestattetes Zweirad beansprucht. Dabei wird zunächst eine Bewegungsgrösse erfasst, die eine Schlingerbewegung wenigstens einer Komponenten des Zweirads erfasst (200), z.B. die Bewegung des Lenkers oder des Vorderrads. Anschliessend wird in Abhängigkeit der Bewegungsgrösse dieser Schlingerbewegung, z.B. durch Vergleich mit einem festen oder variablen Schwellenwert, überprüft, ob diese Schlingerbewegung die Stabilität des Fahrvorgangs gefährdet (210). Sollte eine Gefährdung oder zumindest ein Stabilitäts- bzw. Sicherheitsrisiko festgestellt werden, so wird ein Eingriff in den Vortrieb des Zweirads vorgenommen (220), der die Schlingerbewegung und damit die Bewegungsgrösse reduziert.

## Beschreibung

Die Erfindung betrifft ein Verfahren sowie eine Steuereinheit und ein damit ausgestattetes Zweirad, welches die Schlingerbewegung wenigstens einer Komponenten eines Zweirads erfasst und auf den Vortrieb des Zweirads derart einwirkt, dass die Schlingerbewegung reduziert wird.

### Stand der Technik

Bei Fahrten mit einem Zweirad kann es unter bestimmten Bedingungen zu einem Lenkerflattern kommen. So sind bei Motorrädern bei einer Geschwindigkeit von 60 bis 80 km/h und bei Fahrrädern schon bei einer Geschwindigkeit von 20 km/h Schwingungen in der Vordergabel zu beobachten, die sich aufgrund von Verstärkungen im Bereich der Eigenfrequenz des Systems aufschaukeln und dazu führen, dass der Lenker in einem Teilbereich pendelt. Normalerweise sind diese Pendelbewegungen derart klein, dass das Zweirad weiterhin geradeaus fährt, da es zu keinen nennenswerten Wank- oder Rührbewegungen kommt.

Bei ungünstigen Bedingungen oder ungeübten Fahrern kann es jedoch zu Situationen kommen, in denen dieses Lenkerflattern oder auch Schlingern zu einer Beeinträchtigung oder sogar zu einer Gefährdung der Fahrt führen kann. So können höhere Geschwindigkeiten, eine ungünstige Lasterverteilung am Zweirad (z.B. beladener Gepäckträger oder Tasche am Vorderrad), die Steifigkeit des Rahmens, der Untergrund oder Unaufmerksamkeit des Fahrers dazu führen, dass durch dieses Lenkerflattern ein Sturz herbeigeführt wird.

### Offenbarung der Erfindung

Mit der vorliegenden Erfindung wird ein Verfahren zur Reduzierung eines Lenkerflattern bzw. einer Schlingerbewegung eines Zweirads, eine Steuereinheit, die ein derartiges Verfahren durchführt sowie ein damit ausgestattetes Zweirad beansprucht. Dabei wird zunächst eine Bewegungsgröße erfasst, die eine Schlingerbewegung wenigstens einer Komponenten des Zweirads erfasst, z.B. die Bewegung des Lenkers oder des Vorderrads. Anschließend wird in Abhängigkeit der Bewegungsgröße dieser Schlingerbewegung, z.B. durch Vergleich mit einem festen oder variablen Schwellenwert, überprüft, ob diese Schlingerbewegung die Stabilität des Fahrvorgangs gefährdet. Sollte eine Gefährdung oder zumindest ein Stabilitäts- bzw. Sicherheitsrisiko festgestellt werden, so wird ein Eingriff in den Vortrieb des Zweirads vorgenommen, der die Schlingerbewegung und damit die Bewegungsgröße reduziert.

Durch ein derartiges Vorgehen kann bei erkannten Stabilitätsrisiken automatisch entgegen gesteuert werden, indem geeignete Maßnahmen eingeleitet werden, die der Ursache der Entstehung dieser Schlingerbewegungen entgegen wirken.

In einer Ausgestaltung der Erfindung ist vorgesehen, die Schlingerbewegung des Lenkers zu erfassen, z.B. mittels eines Inertialsensors. Darüber hinaus oder alternativ kann jedoch auch ein entsprechend geeigneter Sensor an einer anderen Komponenten des Zweirads die Gierrate des gesamten Zweirads erfassen. Gerade durch die Verwendung mehrere Sensoren am Zweirad kann ein Bewegungsverhalten des Zweirads oder einzelner Komponenten besser erfasst werden.

Zur Reduktion der Schlingerbewegungen kann eine Aktivierung wenigstens einer Bremse des Zweirads oder ein direkter Eingriff in die Motorsteuerung erfolgen, um den Vortrieb zu reduzieren. Dies ermöglicht eine Reduzierung der Zweiradgeschwindigkeit, so dass die Gefahr eines Sturzes vermindert wird. Insgesamt liegt somit ein automatischer Stabilitätseingriff vor.

Optional kann auch die Rekuperation am Fahrrad aktiviert werden, um den Vortrieb zu reduzieren.

In einer weiteren Ausgestaltung der Erfindung kann vorgesehen sein, dass zur Reduzierung der Schlingerbewegung ein ausgleichendes Antriebsmoment durch den Motor erzeugt wird. Hierdurch kann eine Dämpfung der Schlingerbewegung erreicht werden.

Eine weitere Dämpfung der Schlingerbewegung kann durch die gezielte Erzeugung eines Drehmoments an einem der Räder des Zweirads erreicht werden, z.B. indem das Rad durch den Motor beschleunigt wird.

Besonders von Vorteil ist es, wenn zusätzlich zu der wenigstens einen Bewegungsgröße zur Charakterisierung der Schlingerbewegung zusätzliche fahrdynamische Größen bzw. Betriebsparameter oder Umgebungsparameter erfasst werden. Hierzu eignen sich beispielsweise die Geschwindigkeit des Zweirads, das Gewicht des Fahrers und/oder des Zweirads, die Gewichtsverteilung am Zweirad, die Untergrundbeschaffenheit, das Alter des Fahrers und/oder die Körpermaße des Fahrers. Diese Werte können einzeln oder in Kombination dazu verwendet werden, den Schwellenwert anzupassen. Dies ermöglicht es, die Schlingerbewegung in Relation zu den fahrdynamischen Gegebenheit festzulegen.

Als Zweirad, für die das erfindungsgemäße Verfahren verwendet werden kann bzw. die erfindungsgemäße Steuereinheit Anwendung finden kann, sind beispielhaft Motorräder, Fahrräder, Ebike, Pedelecs, Elektrofahrräder, eScooter und/oder Elektroroller vorgesehen.

Weitere Vorteile ergeben sich aus der nachfolgenden Beschreibung von Ausführungsbeispielen bzw. aus den abhängigen Patentansprüchen.

### Kurze Beschreibung der Zeichnungen

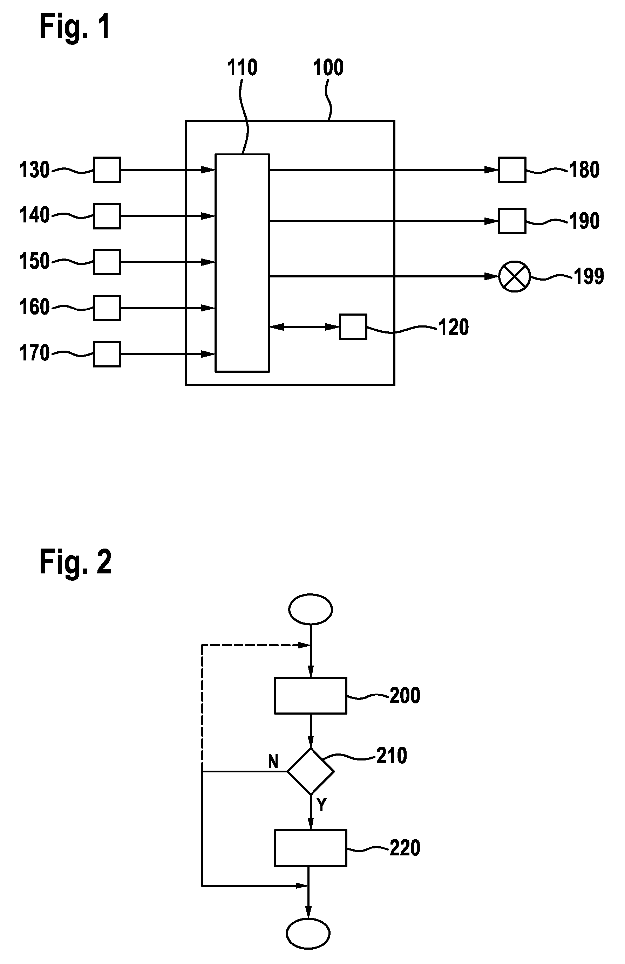

In der Figur 1 ist schematisch eine erfindungsgemäße Steuereinheit dargestellt.
Mit der Figur 2 wird ein möglicher Ablauf des erfindungsgemäßen Verfahrens beschrieben.

### Offenbarung der Erfindung

Zur Realisierung des erfindungsgemäßen Verfahrens kann eine Steuereinheit 100 gemäß der Figur 1 verwendet werden. Hierbei weist die Steuereinheit 100 eine Verarbeitungseinheit 110 auf, die die Sensorgrößen eines Bewegungssensors 130 erfasst. Bei diesem Bewegungssensor 130 kann es sich beispielsweise um einen Intertialsensor, einen Geschwindigkeitssensor oder einen Beschleunigungssensor handeln, der am oder im Lenker eines Zweirads, z.B. eines elektrisch und mittels Muskelkraft antreibbaren Elektrofahrrads, befestigt ist. Denkbar wäre auch, dass dieser Bewegungssensor direkt in der Steuereinheit 100 untergebracht ist, welche z.B. in Form einer Bedieneinheit für den Motor des Elektrofahrrads am Lenker angebracht ist. Der Bewegungssensor 130 erfasst dabei die Schwingungen bzw. Gierraten der Komponenten des Zweirads, z.B. dem Lenker, ggf. auch zeitaufgelöst. Wird von der Verarbeitungseinheit 110 erkannt, dass die Bewegungsgröße z.B. innerhalb eines festgelegten Zeitraums oberhalb eines Schwellenwerts liegt, können geeignete Maßnahmen eingeleitet werden, die eine Reduzierung der Bewegungsgröße und somit eine Stabilität des Fahrvorgangs ermöglichen. Hierbei kann die Steuereinheit 100 (oder die Verarbeitungseinheit 110) auf den Motor 180 des Zweirads einwirken und dessen Antriebsleistung reduzieren oder gänzlich zurücknehmen. Alternativ oder optional kann auch eine am Zweirad vorgesehene Bremse 190 aktiviert werden. Hierbei kann neben einer allgemeinen Reduzierung der Fahrzeuggeschwindigkeit ggf. durch geeignete Wahl mehreren am Zweirad vorhandener Bremsen auch ein zusätzliches (Gier-) Gegen-Moment erzeugt werden, um eine drohende Instabilität zu vermeiden. Neben der Möglichkeit, einen Rekuperationsmodus des Zweirads zu aktivieren, der ebenfalls Schwung und somit Vortrieb des Zweirads reduziert, kann auch eine Mitteilung an den Fahrer mittels einer geeigneten Einrichtung 199 erfolgen.

In einer weiteren Ausführung der Erfindung kann auch vorgesehen sein, dass die Schwingungen des Zweirads bzw. das Schlenkers oder das gieren um die Hochachse des Zweirads durch wenigstens einen weiteren Sensor 140 präzisiert werden kann. Durch diesen zusätzlichen Sensor 140 kann das Bewegungsverhalten und somit auch die Ursache bzw. mögliche Gegenmaßnahmen besser erfasst und abgeleitet werden. Denkbar ist beispielsweise, dass ein Bewegungssensor 130 an oder im Lenker angeordnet ist und ein zweiter Bewegungssensor 140 am Rahmen oder am Gepäckträger befestigt ist. Somit kann über die Erfassung beider Sensoren die Bewegung des Zweirads um die Längsachse detaillierter erfasst werden.

Optional oder zusätzlich kann auch vorgesehen sein, dass die Verarbeitungseinheit 110 weitere Betriebsgrößen erfasst, z.B. die aktuelle Antriebsleistung des Motors 150 oder mittels geeigneter Sensoren 160, 170, ... die Geschwindigkeit des Zweirads, die Trittkraft des Fahrers, die Beschaffenheit des Untergrunds, das Gewicht des Fahrers, des Zweirads und/oder des Gepäcks. Einzelne oder mehrere dieser Sensorgrößen können auch dazu herangezogen werden, den Schwellenwert an die gegebenen Bedingungen anzupassen und ggf. in einem Speicher 120 abzuspeichern. Alternativ kann der Schwellenwert auch fest vorgegeben und zum Abrufen im Speicher 120 hinterlegt werden. In diesem Speicher können auch andere zweiradspezifische oder nutzerspezifische Daten wie beispielsweise die Steifigkeit des Rahmens hinterlegt sein, auf deren Basis ebenfalls der Schwellenwert berechnet werden kann.

Das erfindungsgemäße Verfahren soll gemäß der Figur 2 beschrieben werden. Nach dem Start des Verfahrens wird in einem ersten Schritt 200 wenigstens eine Bewegungsgröße erfasst, die eine Schlingerbewegung und/oder eine Gierrate wenigstens eines Teils des Zweirads repräsentiert. Hierbei kann wie eingangs ausgeführt, ein Intertialsensor verwendet werden, der die Lenkerbewegung erfasst. Ausgehend von dieser Bewegungsgröße wird im nachfolgenden Schritt 210 überprüft, ob diese Bewegungsgröße über einen Schwellenwert SW liegt, ggf. in Abhängigkeit eines vorgegebenen Zeitraums. Dieser Schwellenwert gibt an, inwieweit die Bewegungen des überwachten Teils des Zweirads bzw. dessen Komponente zu einer Gefährdung des Fahrvorgangs führen könnte. Bei einer zu großen Bewegungsgröße liegt eine Gefahr einer Instabilität vor, so dass im nächsten Schritt 220 geeignete Maßnahmen zur Stabilitätserhöhung bzw. zur Reduzierung der Bewegungsgröße eingeleitet werden. Hierbei kann derart auf den Vortrieb des Zweirads und somit auf die Fortbewegung des Zweirads Einfluss genommen werden, dass die Geschwindigkeit des gesamten Zweirads reduziert und/oder ein Gegenmoment erzeugt wird. Denkbar ist dabei, dass eine Bremse am Zweirad aktiviert wird und/oder die Motorleistung reduziert wird. Alternativ kann auch vorgesehen sein, dass ein Rekuperationsmodus aktiviert wird. Optional kann auch eine Information an den Fahrer des Zweirads abgegeben werden, dass bei einer Beibehaltung der Geschwindigkeit oder des Fahrverhaltens eine Gefährdung und ein möglicher Sturz bevorsteht. Diese Warnung, z.B. über eine Anzeige oder einen Warnton, kann der Fahrer dazu nutzen, sein Fahrverhalten oder die Geschwindigkeit zu ändern. Falls die Bewegungsgröße im Schritt 210 kleiner als der Schwellenwert SW ist, kann das Verfahren beendet oder erneut mit Schritt 200 weiterverfolgt werden.

Der Schwellenwert kann in einer Ausgestaltung der Erfindung fest vorgegeben und abgespeichert sein. Alternativ können jedoch auch Umgebungs- und Betriebsparameter herangezogen werden, um individuelle Betriebssituationen zu erkennen und somit einen variablen Schwellenwert abzuleiten. Hierrunter fallen beispielsweise die Fahrbahneigenschaften, die Gewichtsverteilung am und auf dem Zweirad, die Motoransteuerung aber auch die Zweiradeigenschaften selber, wie beispielsweise die Steifigkeit des Zweiradrahmens.

In einem weiteren Ausführungsbeispiel kann auch das zeitliche Verhalten der Bewegungsgröße analysiert werden, um zu erkennen, ob eine instabile Fahrsituation vorliegt. So kann eine schnelle Lenkerbewegung von einer langsamen Kurvenfahrt unterschieden werden. Optional kann auch vorgesehen sein, dass diese zeitliche Berücksichtigung bei dem Vergleich im Schritt 210 bzw. in der Ermittlung des Schwellenwerts berücksichtigt wird.

## Patentansprüche

1. Verfahren zur Reduzierung einer Schlingerbewegung eines Zweirads, wobei vorgesehen ist, dass
• wenigstens eine Bewegungsgröße erfasst wird (200), die eine Schlingerbewegung wenigstens einer Komponenten des Zweirads repräsentiert, und
• ein Vergleich der wenigstens einen Bewegungsgröße mit einem Schwellenwert vorgenommen wird (210), wobei ein Eingriff in den Vortrieb des Zweirads erfolgt (220), falls die Bewegungsgröße den Schwellenwert übersteigt, um die Schlingerbewegung wenigstens der Komponenten des Zweirads bzw. die Bewegungsgröße zu reduzieren.

2. Verfahren nach Anspruch 1, **dadurch gekennzeichnet, dass** als Bewegungsgröße die Schlingerbewegung, insbesondere die Gierrate, des Lenkers erfasst wird.

3. Verfahren nach Anspruch 1 oder 2, **dadurch gekennzeichnet, dass** als Bewegungsgröße die Gierrate des Zweirads erfasst wird.

4. Verfahren nach einem der Ansprüche 1 bis 3, **dadurch gekennzeichnet, dass** der Eingriff in den Vortrieb mittels der Aktivierung einer Bremse (190) und/oder mittels der wenigstens teilweise Reduzierung der Motorleistung eines am Zweirad zum Vortrieb verwendeten Motors (180) erfolgt.

5. Verfahren nach einem der Ansprüche 1 bis 4, **dadurch gekennzeichnet, dass** der Eingriff in den Vortrieb mittels der Aktivierung eines Rekuperationsmodus des Zweirads erfolgt.

6. Verfahren nach einem der Ansprüche 1 bis 5, **dadurch gekennzeichnet, dass** zur Ermittlung des Schwellenwerts zusätzlich die Geschwindigkeit des Zweirads, das Gewicht des Fahrers und/oder des Zweirads, die Gewichtsverteilung am Zweirad, der Untergrund, das Alter des Fahrers und/oder die Körpermaße des Fahrers erfasst werden.

7. Steuereinheit (100) zur Erfassung und Reduzierung einer Schlingerbewegung wenigstens einer Komponenten eines Zweirads, insbesondere nach einem Verfahren der Ansprüche 1 bis 6, wobei die Steuereinheit
• mittels wenigstens eines ersten Bewegungssensors (130, 140) eine Bewegungsgröße erfasst, die eine Schlingerbewegung wenigstens einer Komponenten des Zweirads repräsentiert, und
• in Abhängigkeit des Überschreitens eines Schwellenwerts durch die Bewegungsgröße in den Vortrieb des Zweirads eingreift, um die Schlingerbewegung wenigstens der Komponenten des Zweirads bzw. die Bewegungsgröße zu reduzieren.

8. Steuereinheit (100) nach Anspruch 7, **dadurch gekennzeichnet, dass** als Bewegungsgröße die Schlingerbewegung, insbesondere die Gierrate, des Lenkers erfasst wird.

9. Steuereinheit (100) nach Anspruch 7 oder 8, **dadurch gekennzeichnet, dass** als Bewegungsgröße die Gierrate des Zweirads erfasst wird.

10. Steuereinheit (100) nach einem der Ansprüche 7 bis 9, **dadurch gekennzeichnet, dass** die Steuereinheit (100) mittels einer Aktivierung einer Bremse (190) des Zweirads und/oder mittels der wenigstens teilweise Reduzierung der Motorleistung eines am Zweirad zum Vortrieb verwendeten Motors (180) in den Vortrieb eingreift.

11. Steuereinheit (100) nach einem der Ansprüche 7 bis 10, **dadurch gekennzeichnet, dass** die Steuereinheit mittels der Aktivierung eines Rekuperationsmodus des Zweirads in den Vortrieb eingreift.

12. Steuereinheit (100) nach einem der Ansprüche 7 bis 11, **dadurch gekennzeichnet, dass** die Steuereinheit (100) zur Ermittlung des Schwellenwerts zusätzlich die Geschwindigkeit des Zweirads, das Gewicht des Fahrers und/oder des Zweirads, die Gewichtsverteilung am Zweirad, der Untergrund, das Alter des Fahrers und/oder die Körpermaße des Fahrers erfasst.

13. Zweirad, insbesondere ein Elektrofahrrad, mit einer Steuereinheit (100) nach einem der Ansprüche 7 bis 12 und wenigstens einem ersten Bewegungssensor, wobei die Steuereinheit (100)
• mittels wenigstens des ersten Bewegungssensors (130, 140) eine Bewegungsgröße erfasst, die eine Schlingerbewegung wenigstens einer Komponenten des Zweirads repräsentiert, und
• in Abhängigkeit des Überschreitens eines Schwellenwerts durch die Bewegungsgröße in den Vortrieb des Zweirads eingreift, um die Schlingerbewegung wenigstens der Komponenten des Zweirads bzw. die Bewegungsgröße zu reduzieren.

14. Zweirad nach Anspruch 13, **dadurch gekennzeichnet, dass** der Bewegungssensor (130) am oder im Lenker des Zweirads angebracht ist und die Bewegungsgröße die Gierrate des Lenkers repräsentiert.

15. Zweirad nach Anspruch 13 oder 14, **dadurch gekennzeichnet, dass** die Steuereinheit (100) zur Reduzierung des Vortriebs eine am Zweirad befindliche Bremse (190) aktiviert oder die Antriebsleistung eines zum Vortrieb am Zweirad befindlichen Motor (180) reduziert.
